# EUROPÄISCHE PATENTANMELDUNG

(11) **EP 1 039 174 A1**
(43) Veröffentlichungstag der Anmeldung: **27.09.2000**
(21) Anmeldenummer: 00112670.5
(22) Anmeldetag: 28.09.1996
(51) Int. Cl.: F16H 35/02

(54) **Spezielles Getriebe**

(30) Priorität: 28.09.1995 DE 19536160
(62) Teilanmeldung aus: 96943009.9
(71) Anmelder: Hörmansdörfer, Gerd, D-31303 Burgdorf (DE)
(72) Erfinder: Hörmansdörfer, Gerd, D-31303 Burgdorf (DE)

(57) **Zusammenfassung**

Die Erfindung betrifft ein spezielles Getriebe für die Erzeugung ungleichmäßiger Übersetzungen. Es wird vorgeschlagen, das spezielle Getriebe als sogenannten Wälzschraubtrieb aus Bauteilen mit unsteten Wälzkurven, insbesondere in Gestalt unrunder Wälzschraubräder zu gestalten. Derartige unrunde Wälzschraubräder sind gegenüber unrunden stirnverzahnten Rädern mit geringerem Aufwand herstellbar. Ausserdem erlauben sie extrem eckige Unstetigkeiten der Wälzkreise. Bei entsprechender Auslegung sind solche Getriebe selbsthemmend. Dies eröffnet Vorteile für bestimmte Anwendungen.

## Beschreibung

Die Erfindung betrifft ein spezielles Getriebe für die Erzeugung ungleichförmiger Übersetzungen.

Ungleichförmig übersetzende Getriebe mit verzahnten unrunden Bauteilen sind generell seit spätestens der ersten Hälfte des zwanzigsten Jahrhundert für zahlreiche Anwendungen bekannt. Im Prinzip dienen derartige Getriebe der Erzeugung von ungleichmässigen Bewegungsabläufen aus einem rotativen Antrieb gleichförmiger Winkelgeschwindigkeit oder umgekehrt. Meistens sind derartige Getriebe als Rädergetriebe gestaltet, jedoch sind auch andere Ausführungsformen, z.B. ungleichförmig übersetzende Zahnstangengetriebe für Türschliesser bekannt.

In der Technik gibt es eine große Anzahl von Anwendungsmöglichkeiten für derartige Sondergetriebe. Als Beispiele seien hier Verpackungsmaschinen, Spinn- und Webmaschinen, bestimmte Hydromotoren, Fensterheber, oder angetriebene Formbohrwerkzeuge genannt. Für solche Aufgabenstellungen werden bislang unrunde Zahnräder bzw. verzahnte Körper mit Stirnverzahnung verwendet. In der Regel arbeiten dabei zwei verzahnte Elemente als Paar mit zueinander komplementären Wälz- bzw. Rollkurven zusammen.

Besteht solch ein Paar aus aussen verzahnten Rädern mit einem festen gegenseitigen Achsabstand, so errechnet sich das jeweils für eine bestimmte Winkelstellung geltende Ubersetzungsverhältnis aus dem Quotienten der beiden Wälzkreisradien. Mittels der Variation dieser Wälzkreisradien sind vorgegebene Geschwindigkeitsverläufe des Abtriebs mit grosser Bandbreite erzeugbar.

Vor der Einführung der CNC-Werkzeugmaschinen stellte die wirtschaftliche Herstellung von unrunden verzahnten Elementen noch ein recht großes Problem dar. Wenn hier auch einige bemerkenswerte Resultate erzielt wurden, so war die Herstellung doch stets mit einer komplizierten und aufwendigen Änderung der Mechanik der Werkzeugmaschinen verbunden, sodass derartige Bauteile ausgesprochen teuer waren. Mit der Einführung numerisch gesteuerter Wälzstossmaschinen sind heute auch sehr komplexe Werkstücke mit derartigen Verzahnungen in hoher Qualität bei deutlich günstigeren Kosten herstellbar. Trotzdem muss insgesamt mit wesentlich höheren Kosten im Vergleich z.B. zu runden Zahnrädern gerechnet werden.

Ein weiteres Problem besteht wenn Bauteile mit sehr abrupten Änderungen der Wälzkurve benötigt werden, z.B. mit spitz eingezogenen oder ausgestellten Kordioiden. Es ist dann an diesen extremen Unstetigkeiten entweder wegen der Formgestalt des Stosswerkzeugs oder der verhungerten Zahngeometrie keine akzeptable Gestaltung der dortigen Verzahnung erzeugbar. Damit sind solche mittels Wälzstossens erzeugte Verzahnungen auf einen weicheren Verlauf des Wälzkreises beschränkt.

Ein anderer Nachteil üblicher ungleichförmig übersetzender Getriebe besteht hinsichtlich bestimmter Anwendungen darin, daß diese von der Abtriebs- bzw. von der Antriebsseite her frei durchdrehbar sind, also keine eigene Selbsthemmung besitzen. Falls eine Selbst-hemmung eines derartigen Getriebes benötigt wird, sind dafür zusätzliche, sehr aufwendige Bauteile erforderlich, z.B. in Gestalt eines Freilaufs.

Es bestand daher die Aufgabe zur Schaffung eines ungleichförmig übersetzenden Getriebes ohne die oben beschriebenen Nachteile. Das zu schaffende Getriebe sollte einfach und extrem kostengünstig herstellbar sein, die Realisierung auch sehr abrupter Bewegungsverläufe erlauben, und wahlweise die Möglichkeit einer inhärenten Selbsthemmung ohne zusätzliche Bauteile eröffnen.

Die genannte Aufgabe wird gemäss der Erfindung dadurch gelöst, daß für die Erzeugung derartiger ungleichförmiger Ubersetzungen ein spezielles Getriebe in Gestalt eines Doppelschraubgetriebes vorgeschlagen wird. Doppelschraubgetriebe sind Stirnradgetriebe, die jedoch gegenüber herkömmlichen Stirnradgetrieben einen Schrägungswinkel von ca. 80° aufweisen, so dass die Räder nur einen Zahn besitzen können - ähnlich einer eingängigen Schraube. Für runde Räder sind solche Verzahnungen im Prinzip Gewinde, wobei auf einem Rad nebeneinander jeweils links- und rechtsgewundene Zahnrippen realisiert sind, um die Axialkräfte zu kompensieren. Die miteinander kämmenden Bauteile sind dann achsparallel angeordnet. Dabei wird das jeweilige Ubersetzungsverhältnis von der Gangzahl bestimmt und nicht zwingend vom Wälzkreisradius. Der Wälzkreisradius kann für rein rollende Bewegungen der kämmenden Partner ausgelegt werden. Dann steigt der Wirkungsgrad und die Selbsthemmung sinkt, bzw. entfällt. Mit zunehmender Abweichung des Verhältnisses der Wälzkreisradien vom Verhältnis der Gangzahlen tritt Gleitreibung auf (ähnlich wie bei einem Schneckenradgetriebe), der Wirkungsgrad sinkt, und der Grad der Selbsthemmung bzw. Selbstbremsung steigt an.

Doppelschraubgetriebe mit ungleichförmiger Übersetzung, z.B. unter Verwendung unrunder Räder, sind bisher nicht bekannt geworden. Das vorgeschlagene Doppelschraubgetriebe hat den Vorteil, daß es bezüglich der Wälzkurven die Realisierung von erheblichen Unstetigkeiten erlaubt. Außerdem sind entsprechende unrunde Räder recht einfach herstellbar, z.B. auf einer Drehmaschine im Gewindeschneidzyklus unter Benutzung bekannter Werkzeugeinheiten zur Unrundbearbeitung, oder unter Anwendung einer entsprechenden Programmierung. Daneben können Doppelschraubgetriebe in einer oder in beiden Drehrichtungen als selbsthemmend ausgelegt werden. Dies ist für bestimmte Anwendungsfälle von Vorteil. Bespielsweise kann so bei sogenannten Formbohrgeräten für die Benutzung auf dem Revolver von CNC-Drehmaschinen verhindert werden, dass im Falle eines Maschinencrashs die vom Futter mitgerissene Werkzeugaufnahme den internen Antrieb des Revolvers zerstört.

Für die praktische Ausführung des speziellen ungleichförmig übersetzenden Getriebes sind innerhalb gewisser Vorgaben konstruktive Spielräume gegeben. Im Falle einer Ausführung als reines Rädergetriebe auf der Grundlage geradzahliger Gangzahlverhältnisse besteht so die Möglichkeit zur Erhöhung oder Absenkung der Abtriebsdrehzahl gegenüber der Drehzahl des Antriebs. Daneben ist das Getriebe als Planetengetriebe, bzw. als Getriebe aus Hohlrad und Planetenrad herstellbar, womit z.B. ein zu weites Auskragen des Abtriebs aus der Antriebsachse vermeidbar ist.

Die Erfindung soll im folgenden anhand der drei Zeichnungsfiguren näher erläutert werden.

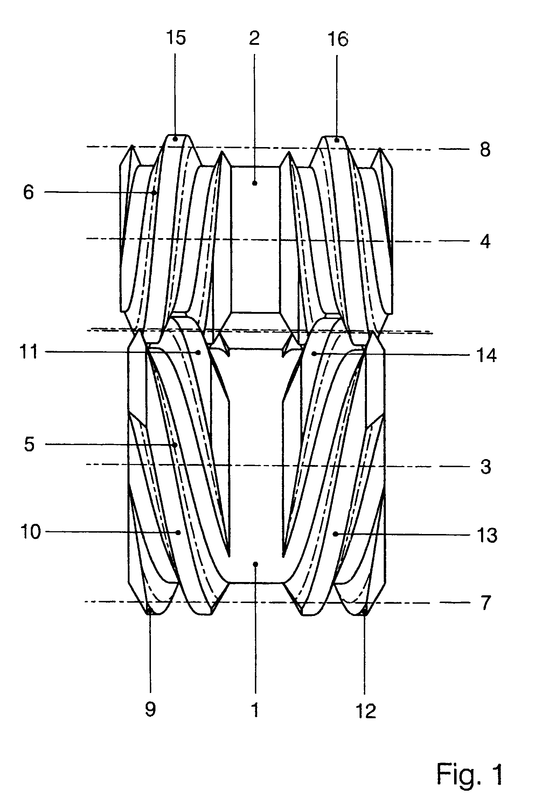

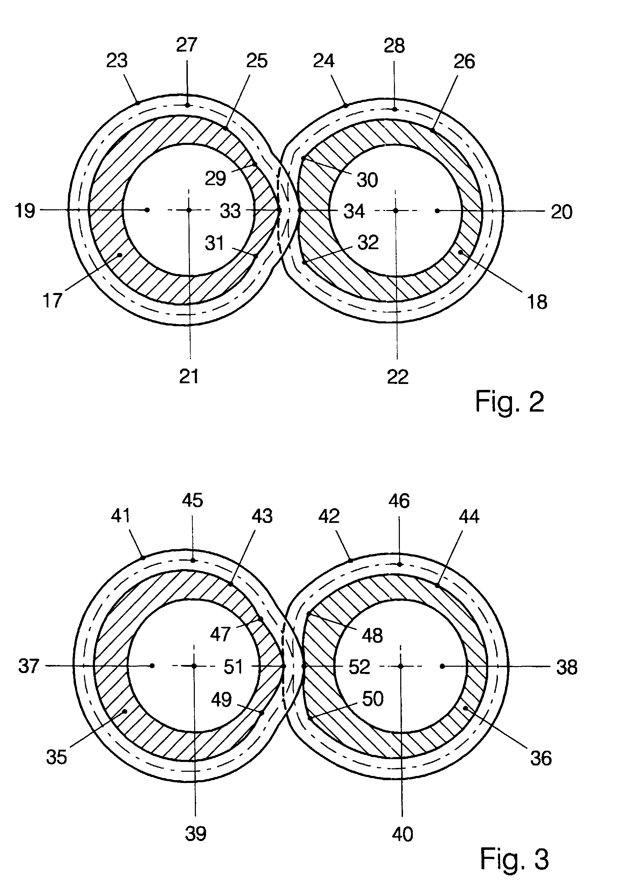

Die Fig.1 zeigt das Räderpaar eines Doppelschraubgetriebes gemäss dem Stand der Technik. In Fig.2 ist ein erfindungsgemässes Räderpaar für eine ungleichförmig übersetzende Getriebestufe abgebildet. Eine Abwandlung des Räderpaars aus Fig.2 wird in Fig.3 dargestellt.

Die Fig.1 zeigt die Darstellung eines aus einem Räderpaar bestehenden Doppelschraubtriebs und wurde dem Katalog eines Herstellers für derartige Getriebe entnommen. Die beiden Doppelschraubräder sind rund und entsprechen somit dem Stand der Technik. Die Fig.1 wurde hier zu dem einzigen Zweck herangezogen, den in dieser Schrift verwendeten Terminus technicus "Doppelschraubgetriebe" deutlich zu machen. Der hier selbsthemmend ausgelegte Doppelschraubtrieb besteht aus den Doppelschraubrädern 1 und 2, wobei deren Gangzahlverhältnis mit 3:1 und das Radienverhältnis mit 3:2 ausgewählt ist. Die parallel zueinander liegenden Achsen 3 und 4 der Doppelschraubräder sind ebenso wie die Wälzkreise 5 und 6, bzw. die Wälzkreisradien 7 und 8 strich-punktiert eingezeichnet. Dabei sind die auf den rechten und linken Flanken der Getriebezähne gebildeten Wälzkreise radial gegeneinander verschoben. Die Getriebezähne 9, 10, 11, 12, 13, 14 des ersten Doppelschraubrades 1, bzw. 15 und 16 des zweiten Doppelschraubrades 2 sind im Prinzip aus Schraubflächen gebildete Gewinderippen. Dabei sind die Getriebezähne 9, 10 und 11 bzw. 16 rechtsgängig, und die Getriebezähne 12, 13 und 14, bzw. 15 linksgängig ausgeführt.

In der Zeichnungsfigur 2 wird ein Ausführungsbeispiel in Gestalt eines unrunden Räderpaares für ein Doppelschraubgetriebe gemäss der Erfindung gezeigt, welches für die Erzeugung einer Winkelgeschwindigkeitsänderung eines sogenannten Formbohrwerkzeugs für die Herstellung eines Vierkants berechnet ist. Das antreibende Rad 17 greift in ein angetriebenes Rad 18 ein. Beide Räder sind zentral mit einer Bohrung 19, 20 versehen. Die Drehachse 21, 22 ist als Mittelpunktskreuz eingezeichnet. Der im Eingriff stehende Bereich der Räder ist jeweils durch den Fusskreis 25, 26 und den Kopfkreis 23, 24 begrenzt. Dazwischen ist der Wälzkreis 27, 28 als lang/kurz gestrichelte Linie dargestellt. Die umlaufende Radkontur weist Unsteigkeiten in Gestalt von Innenecken 29, 31 am antreibenden Rad bzw. 34 am angetriebenen Rad, und entsprechenden Aussenecken 33 am antreibenden bzw. 30, 32 am angetriebenen Rad auf. Für die generelle Funktion des ungleichmässig übersetzenden Doppelschraubgetriebes ist die exakte Gestalt der Radverzahnung, wie z.B. Zahnhöhe, Flankenwinkel und dergleichen, ohne direkten Einfluss. Aus diesem Grund und aus Gründen der zeichnerischen Vereinfachung sind in der Zeichnung keine Verzahnungen abgebildet.

Das in Fig. 3 dargestellte Räderpaar 35, 36 ist von demjenigen der Fig. 2 abgeleitet. Dabei sind die Drehachsen 39, 40 und die Bohrungen 37, 38 mit den zuvor gezeigten identisch. Die Umfangskontur aus den Fusskreisen 43, 44, den Kopfkreisen 41, 42 und den Wälzkreisen 45, 46 wurde an den Unstetigkeiten 47, 48, 49, 50, 51, 52 durch Einfügung von Übergangsradien geglättet, um ein weicheres Abrollen des Radpaares zu erzielen. Mit dieser Massnahme ist eine geringfügige Verzerrung der Übersetzungsfunktion verbunden, wobei für die vorgesehene Verwendung des Räderpaares in einem Formbohrgerät die damit an einem Werkstück erzeugten Konturen an Stelle von exakt runden Innenecken zu so genannten gotischen Bögen abgewandelt werden. Am so hergestellten Werkstück ist diese Rundungsverzerrung im Prinzip ohne Belang.

Anhand der beiden Beispiele wird deutlich, dass hinsichtlich der Gestaltung derartiger Wälzschraubräder eine gewisse Bandbreite besteht, welche im Bereich zwischen abrupten Änderungen bis zu weichen Verläufen der Ubersetzungsfunktion frei wählbar ist. Diese Gestaltungsfreiheit ist bei herkömmlichen Getrieben nicht gegeben.

## Patentansprüche

1. Getriebe für die Erzeugung einer ungleichmässigen Uber- bzw. Untersetzung aus mindestens zwei miteinander kämmenden Bauteilen, wobei mittels einer gleichmässigen Rotation bzw. Bewegung des ersten Bauteils eine vorbestimmte ungleichmässige Rotation bzw. Bewegung des zweiten Bauteils erzeugbar ist oder umgekehrt, dadurch gekennzeichnet, dass das Getriebe ein Doppelschraubgetriebe ist.

2. Getriebe gemäss Anspruch 1, dadurch gekennzeichnet, dass die Wälzkurven der miteinander kämmenden Bauteile mindestens jeweils in einem Teilbereich zueinander komplementäre Unstetigkeiten aufweisen.

3. Getriebe gemäss Anspruch 1, dadurch gekennzeichnet, dass die Wälzkurven der miteinander kämmenden Bauteile mittels ihrer gegenseitigen Übersetzungsbeziehung mindestens jeweils in einem Teilbereich einen nach einem vorbestimmten Bewegungsgesetz sich ändernden Ubersetzungsfaktor realisieren.

4. Getriebe gemäss einem oder mehreren der Ansprüche 1 bis 3, dadurch gekennzeichnet, dass eines der miteinander kämmenden Bauteile ein Getrieberad mit unrundem Wälzkreis ist.

5. Getriebe gemäss einem oder mehreren der Ansprüche 1 bis 3, dadurch gekennzeichnet, dass beide miteinander kämmenden Bauteile Getrieberäder mit unrunden komplementären Wälzkreisen sind.

6. Verzahnte Bauteile, insbesondere verzahntes Bauteilpaar, z.B. aus Rad und Zahnstange, oder Räderpaar für ein ungleichmässig über- oder untersetzendes Doppelschraubgetriebe gemäss einem oder mehreren der Ansprüche 1 bis 5.
